# FASCICULE DE BREVET EUROPEEN

(11) **EP 4 464 529 B1**
(45) Date de publication et mention de la délivrance du brevet: **13.05.2026**
(21) Numéro de dépôt: 24171768.5
(22) Date de dépôt: 22.04.2024
(51) Int. Cl.: B60J 5/06, E05D 15/10, E05D 15/30

(54) **DISPOSITIF DE GUIDAGE DE PORTE DE CABINE DE PILOTAGE**
FÜHRUNGSVORRICHTUNG FÜR DIE TÜR EINER FAHRERKABINE
COCKPIT DOOR GUIDING DEVICE

(30) Priorité: 16.05.2023 FR 2304869
(43) Date de publication de la demande: 20.11.2024
(73) Titulaire: Exel Industries, 51200 Epernay (FR)
(72) Inventeur: BOGE, Anthony, 51160 HAUTVILLERS (FR)
(74) Mandataire: Bandpay & Greuter

(56) Documents cités:
- FR-A1- 3 068 723
- FR-B1- 2 892 142
- JP-A- 2017 159 815

## Description

### DOMAINE TECHNIQUE

La présente invention concerne le domaine technique des machines agricoles.

Plus particulièrement, l'invention concerne le domaine technique des cabines de pilotage de machines agricoles et vise un dispositif de guidage de l'ouverture et de la fermeture de portes de telles cabines de pilotage.

### ETAT DE LA TECHNIQUE

De manière classique, une cabine de pilotage, notamment pour un engin agricole tel qu'un tracteur enjambeur circulant dans des rangs de vignes, comprend une paroi latérale délimitant une ouverture et une porte mobile entre une position fermée dans laquelle ladite porte ferme l'ouverture de la cabine et une position ouverte dans laquelle ladite porte laisse libre l'ouverture de la cabine. Un utilisateur peut ainsi accéder à l'intérieur de la cabine de pilotage pour accéder au poste de pilotage de l'engin agricole. Pour répondre à des besoins normatifs, la cabine de pilotage comprend des moyens de pressurisation pour être pressurisée, ce qui nécessite que la porte en position fermée ferme de manière étanche l'ouverture de la cabine.

Le passage entre la position ouverte et la position fermée de la porte est réalisé au moyen d'un dispositif de guidage de la porte. Différents mouvements de guidage sont connus de manière classique. Le mouvement de guidage peut ainsi être « battant », c'est à dire que la porte est montée sur charnières et pivotante autour d'un axe vertical des charnières, ou « coulissant », c'est-à-dire que la porte est montée sur des glissières et translate selon un axe longitudinal de la cabine. Enfin, le mouvement de guidage peut être « louvoyant », c'est-à-dire coulissant de manière à ce que la porte s'éloigne de la cabine lors du passage de la position fermée à la position ouverte.

Dans le cas d'un tracteur enjambeur de vignes, la cabine de pilotage peut se situer entre deux rangs de vignes, à une même hauteur que la végétation des rangs de vignes. Dans cette configuration, l'encombrement transversal que la porte de la cabine peut occuper en position ouverte dans le rang est limité, ce qui complique l'utilisation d'un dispositif de guidage battant ou louvoyant et rend préférable le choix d'un dispositif de guidage de porte du type coulissant. Néanmoins, un tel dispositif de guidage coulissant présente l'inconvénient d'être peu étanche lorsque la porte est en position fermée, ce qui constitue un obstacle majeur à la pressurisation de la cabine de pilotage pour répondre au besoin normatif.

L'invention vise donc à résoudre tout ou partie des inconvénients de l'état de la technique (JP 2017 159815 A, FR 2 892 142 B1 et FR 3 068 723 A1), en proposant un dispositif de guidage de type louvoyant conférant un encombrement transversal nettement réduit et une étanchéité permettant la pressurisation simple de la cabine de pilotage.

### PRESENTATION DE L'INVENTION

Plus précisément, l'invention a pour objet un dispositif de guidage d'une porte configuré pour relier ladite porte à une cabine de pilotage d'un engin, notamment d'un engin agricole, la cabine comprenant une paroi latérale délimitant une ouverture et un dessus, la porte de la cabine étant mobile entre une position fermée dans laquelle ladite porte ferme l'ouverture de la cabine et une position ouverte dans laquelle ladite porte laisse libre l'ouverture de la cabine, le dispositif comprenant :
- un rail fixé sur le dessus la cabine et s'étendant selon un axe longitudinal de la cabine ;
- un premier organe de roulement en liaison glissière avec le rail et un deuxième organe de roulement en liaison glissière avec le rail ;
- une première bielle en liaison pivot selon un premier axe vertical de la cabine avec le premier organe de roulement et en liaison pivot selon un deuxième axe vertical de la cabine avec un montant supérieur de la porte, et une deuxième bielle en liaison pivot selon un troisième axe vertical avec le deuxième organe de roulement et en liaison pivot selon un quatrième axe vertical avec le montant de la porte.

Par ailleurs, le dispositif de guidage comprend une première came fixée à la cabine sur le dessus et vers l'intérieur par rapport au rail, la première came présentant une première portion s'étendant parallèlement au rail et une deuxième portion incurvée en direction du rail, la première bielle étant en liaison glissière avec la première came, le dispositif de guidage comprenant en outre un moyen d'asservissement de la deuxième bielle par rapport à la première bielle de sorte que la première et deuxième bielle décrivent un même mouvement, le dispositif de guidage étant configuré de sorte que, pour passer de la position ouverte à la position fermée, la porte de la cabine décrive un premier mouvement de translation longitudinale par rapport à la cabine lorsque la première bielle circule sur la première portion de la première came, et que la porte de la cabine décrive un deuxième mouvement de translation vers l'ouverture de la cabine lorsque la première bielle circule sur la deuxième portion de la première came, la première et deuxième bielles pivotant respectivement par rapport au premier et deuxième organes de roulement.

Grâce à une telle combinaison de caractéristiques, un tel dispositif de guidage permet de réduire l'encombrement transversal de la porte en position ouverte et pendant la fermeture, en réglant notamment la longueur des bielles et des cames de sorte que la porte coulisse sur le rail au plus proche de l'extérieur de la paroi latérale de la cabine. En outre lors de la fermeture de la porte, la circulation de la première bielle dans la portion incurvée de la came en direction du rail induit un pivotement des bielles par rapport aux organes de roulement, suivi ou en même temps qu'un pivotement du montant de la porte par rapport aux bielles, de sorte que les bords de la porte sont plaqués contre la paroi latérale de la cabine au niveau de l'ouverture, permettant d'assurer une fermeture étanche de la cabine. Un engin agricole, notamment un tracteur enjambeur de vignes, dont la cabine est munie d'un tel dispositif de guidage peut ainsi présenter une cabine à hauteur de la végétation. Enfin, un utilisateur de l'engin agricole peut ainsi ouvrir la porte de la cabine et rouler avec la porte de la cabine ouverte, même lorsque l'engin agricole se trouve dans un rang de vignes.

Avantageusement, le dispositif de guidage est configuré pour fermer de manière étanche l'ouverture de la cabine de pilotage.

Selon un mode de réalisation, le moyen d'asservissement mécanique est une deuxième came fixée à la cabine sur le dessus et vers l'intérieur par rapport au rail et présentant une première portion s'étendant parallèlement au rail et une deuxième portion incurvée en direction du rail, la deuxième bielle étant en liaison glissière avec la deuxième came. Dans une telle configuration, la deuxième bielle est alors asservie mécaniquement par l'intermédiaire de la deuxième came sans être liée mécaniquement directement à la première bielle. Ceci permet de plaquer plus efficacement la porte de la cabine sur la paroi latérale de la cabine par ses deux extrémités longitudinales, augmentant l'étanchéité de la fermeture.

Avantageusement, la première portion de la deuxième came comprend une butée configurée pour être en contact avec la deuxième bielle lorsque la porte de la cabine est en position ouverte. Dans une telle configuration, le dispositif de guidage peut maintenir la porte en position ouverte, la première bielle comprenant de préférence une encoche configurée pour coopérer avec la butée.

Avantageusement, la première came et la deuxième came sont alignées suivant l'axe longitudinal de la cabine. Dans une telle configuration, la première came et la deuxième came, respectivement le premier organe de roulement et le deuxième organe de roulement, respectivement la première et la deuxième bielle peuvent être identiques, ce qui facilite la fabrication du dispositif de guidage.

Avantageusement, la deuxième bielle présente une longueur supérieure à une longueur de la première bielle, la deuxième came étant à une distance supérieure du rail par rapport à la première came. Dans une telle configuration, l'amplitude d'ouverture de la porte est sensiblement augmentée.

Avantageusement, chacune des bielles comprend une portion longue et une portion courte de sorte à présenter une géométrie en forme de L, le premier axe vertical et le deuxième axe vertical étant positionné à l'intersection des deux portions de chacune des bielles et le troisième axe vertical et quatrième axe vertical étant positionné à une extrémité libre de la portion courte de chacune des bielles. Dans une telle configuration, le pivotement de la porte par rapport aux bielles et le pivotement des bielles par rapport aux organes de roulement est simultané.

Avantageusement, au moins une troisième came fixée à un dessous de la cabine, la porte de la cabine comprenant en outre un montant inférieur verticalement opposé au montant supérieur, le montant inférieur étant en liaison glissière d'axe longitudinal avec la troisième came. Dans une telle configuration, la porte est guidée par son montant supérieur et par son montant inférieur, facilitant ainsi le glissement des organes de roulement sur le rail, le poids de la porte étant distribué sur un plus grand nombre d'appuis.

Selon un autre aspect de l'invention, celle-ci a trait à une cabine de pilotage comprenant une paroi latérale délimitant une ouverture et comprenant en outre une porte mobile entre une position fermée dans laquelle ladite porte ferme l'ouverture de la cabine et une position ouverte dans laquelle ladite porte laisse libre l'ouverture de la cabine, la cabine de pilotage comprenant en outre un dispositif de guidage tel que décrit ci-dessus reliant la porte à la cabine de pilotage.

Avantageusement, la cabine comprend des moyens de pressurisation de ladite cabine. Dans une telle configuration, la cabine peut être pressurisée. Par le vocable « pressurisée », on entend le fait que la pression de l'air à l'intérieur de la cabine est plus élevée de la pression de l'air à l'extérieur de la cabine.

Selon un autre aspect de l'invention, celle-ci a trait à un engin agricole, notamment un tracteur enjambeur pour vignes, comprenant une cabine de pilotage tel que décrit ci-dessus.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en vue de face d'un engin agricole selon un autre aspect de l'invention ;
La figure 2 est une représentation schématique en perspective d'une cabine de pilotage d'un engin agricole dans une position fermée d'une porte de la cabine ;
La figure 3 est une représentation schématique en perspective d'une cabine de pilotage d'un engin agricole dans une position retirée de la porte de la cabine ;
La figure 4 est une représentation schématique en vue de dessus d'un dispositif de guidage d'une porte de cabine de pilotage selon un premier mode de réalisation, dans une position ouverte de la porte ;
La figure 5 est une représentation schématique en vue de dessus du dispositif de guidage de la figure 3, dans une position fermée de la porte ;
La figure 6 est une représentation schématique en vue de dessus d'un dispositif de guidage d'une porte de cabine de pilotage selon un autre mode de réalisation, dans une position ouverte de la porte ;
La figure 7 est une représentation schématique en vue de dessous d'un dispositif de guidage d'une porte de cabine de pilotage selon un autre mode de réalisation, dans une position fermée de la porte ;

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

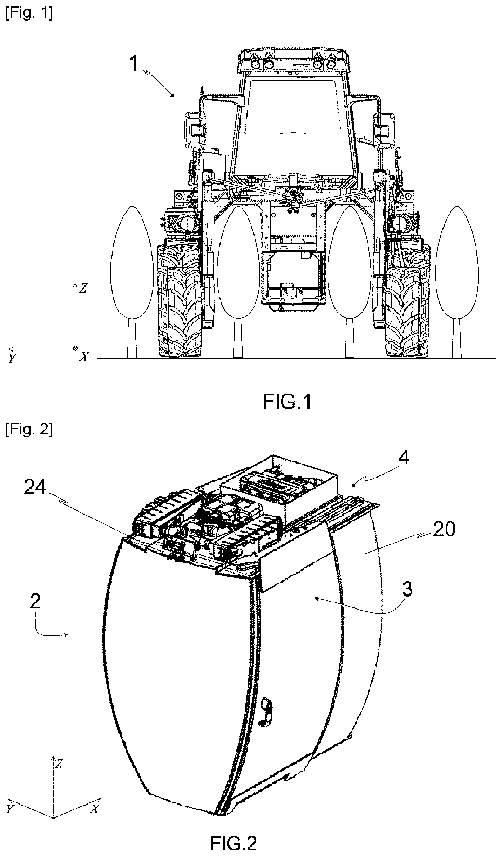

La figure 1 illustre selon un premier aspect de l'invention un engin agricole 1, tel qu'un tracteur enjambeur circulant dans des rangs de vignes. L'engin agricole 1 comprend une cabine 2 de pilotage. La cabine 2 est configurée pour accueillir un utilisateur, notamment le conducteur de l'engin agricole 1. Dans la description et les revendications on adoptera à titre non limitatif la terminologie « longitudinal », « transversal », et « vertical » en référence au trièdre direct X, Y, Z indiqué aux figurés et attaché à la cabine 2 de pilotage. De plus, les termes « dessus », « dessous », « vertical » et leurs dérivés font référence à la position ou à l'orientation d'un élément ou d'un composant, cette orientation étant considérée lorsque l'engin agricole 1 et la cabine 2 sont en configuration de service. Lorsque l'engin agricole 1 circule dans les rangs de vignes, la cabine 2 est situé verticalement à une même hauteur que lesdites vignes, de sorte que l'utilisateur dans la cabine 2 de pilotage puisse observer les opérations réalisées par des outillages portés par l'engin agricole 1.

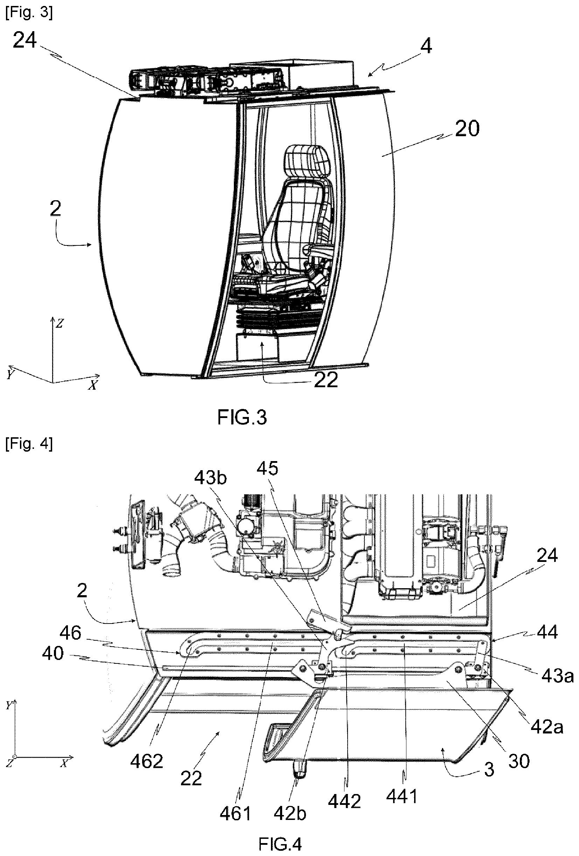

La figure 2 et la figure 3 illustrent selon un autre aspect de l'invention la cabine 2 de pilotage de l'engin agricole 1 de la figure 1. Pour davantage de lisibilité, l'engin agricole n'est pas représenté. La cabine 2 présente une enveloppe globalement prismatique parallélépipédique et s'étend de préférence davantage longitudinalement que transversalement. La cabine 2 de pilotage comprend une paroi latérale 20 délimitant une ouverture 22. L'ouverture 22 permet à un utilisateur, notamment au conducteur de l'engin agricole 1, d'accéder à l'intérieur de la cabine 2 pour piloter l'engin agricole 1. L'ouverture 22 est de préférence localisée dans un plan longitudinal X, Z comme illustré sur la figure 2, mais peut alternativement se localiser dans un plan transversal Y, Z, y compris sur une face avant par rapport au sens d'avancement de l'engin agricole 1. Comme illustré notamment sur la figure 3, la cabine 2 comprend en outre une porte 3 mobile entre une position fermée dans laquelle ladite porte 3 ferme l'ouverture 22 et une position ouverte dans laquelle ladite porte 3 laisse libre l'ouverture 22 de la cabine 2.

La cabine 2 comprend en outre un dessus 24. Le dessus 24 est notamment formé par un panneau s'étendant sensiblement dans un plan horizontal X, Y et notamment configuré pour accueillir des équipements de l'engin agricole 1, par exemple une bouche de ventilation de la cabine 2. De préférence, la cabine 2 comprend des moyens de pressurisation (non illustrés) configurés pour pressuriser l'intérieur de la cabine 2 lorsque la porte 3 est en position fermée. Par le vocable « pressurisé », on entend le fait que la pression de l'air à l'intérieur de la cabine est plus élevée que la pression de l'air à l'extérieur de la cabine. Par ailleurs, la porte 3 comprend un montant supérieur 30. Le montant supérieur 30 s'étend parallèlement au dessus 24 de la cabine 2.

Selon un autre aspect de l'invention, notamment illustré sur la figure 4, la figure 5, la figure 6 et la figure 7, la porte 3 est reliée à la cabine 2 par l'intermédiaire d'un dispositif de guidage 4. Le dispositif de guidage 4 est configuré pour relier la porte 3 à la cabine 2. Par le vocable « relier », on entend d'une part le fait que le dispositif de guidage 4 est en liaison mécanique avec la porte 3 et en liaison mécanique avec la cabine 2. D'autre part, on entend que le dispositif de guidage 4 guide le passage de la porte 3 de la position ouverte à la position fermée.

Le dispositif de guidage 4 comprend un rail 40 fixé sur le dessus de la cabine 2. Le rail 40 s'étend selon l'axe longitudinal X de la cabine 2. Le dispositif comprend également un premier organe de roulement 42a en liaison glissière avec le rail 40 et un deuxième organe de roulement 42b en liaison glissière avec le rail 40. Avantageusement, les organes de roulement 42a, 42b peuvent être formés par un chariot muni de galets roulant sans glissement sur le rail 40. Le dispositif de guidage 4 comprend en outre première bielle 43a en liaison pivot selon un premier axe vertical parallèle à l'axe vertical Z et une deuxième bielle 43b en liaison pivot selon un deuxième axe vertical par allèle à l'axe vertical Z. De préférence, les bielles 43a, 43b présentent chacune une portion longue et une portion courte, la portion courte présentant une longueur inférieure à celle de la portion longue de sorte que la bielle présente sensiblement une géométrie en « L ». Dans le mode de réalisation décrit, le premier axe vertical et le deuxième axe vertical sont positionnés à l'intersection des deux portions de chacune des bielles 43a, 43b. La première bielle 43a est d'autre part en liaison pivot selon un troisième axe vertical parallèle à l'axe vertical Z avec le montant supérieur 30 de la porte 3. La deuxième bielle 43b est d'autre part en liaison pivot selon un quatrième axe vertical parallèle à l'axe vertical Z avec le montant supérieur 30 de la porte 3. Dans le mode de réalisation décrit, le troisième axe vertical et le quatrième axe vertical sont positionnés à une extrémité libre de la portion courte de chacune des bielles 43a, 43b.

Par la translation sur le rail 40 des organes de roulement 42a, 42b, la porte 3 décrit un premier mouvement de translation longitudinale par rapport à la cabine 2. Pour passer de la position ouverte à la position fermée, la porte 3 se rapproche ainsi longitudinalement de l'ouverture 22. La porte 3 peut ainsi translater sur le rail 40 selon une distance de course prédéterminée des organes de roulement 42a, 42b. Par le pivotement de la première bielle 43a par rapport au premier organe de roulement 42a, respectivement le pivotement de la deuxième bielle 43b par rapport au deuxième organe de roulement 42b et, simultanément, le pivotement du montant supérieur 30 par rapport aux bielles 43a, 43b, la porte 3 décrit un deuxième mouvement de translation transversal par rapport à la cabine 2. Pour passer de la position ouverte à la position fermée, la porte 3 se rapproche ainsi transversalement de la cabine 2 et plus particulièrement de l'ouverture 22.

Le dispositif de guidage 4 comprend en outre une première came 44 fixée sur le dessus de la cabine 2. Le dispositif de guidage 4 comprend un moyen d'asservissement 46 de la deuxième bielle 43b. Le moyen d'asservissement 46 de la deuxième bielle 43b asservit mécaniquement la deuxième bielle 43b à la première bielle 43a pour lui faire décrire le même mouvement que la première bielle 43a.

La première came 44 est plus éloignée transversalement de la porte 3 que le rail 40. La première came 44 comprend une première portion 441 et une deuxième portion 442. La première portion 441 de la came 44 s'étend parallèlement au rail 40. La deuxième portion 442 de la première came 44 est incurvée en direction du rail 40. La première bielle 43a est en liaison glissière selon l'axe longitudinal X avec la première came 44. La première bielle 43a comprend de préférence des organes de roulement au niveau de sa portion longue configurés pour rouler sans glissement dans le chemin formé par la première came 44.

Dans le mode de réalisation décrit, le moyen d'asservissement 46 est une deuxième came 46 fixée sur le dessus de la cabine 2. Dans une telle configuration, la deuxième bielle 43b est alors asservie mécaniquement par l'intermédiaire de la deuxième came 46 sans être liée mécaniquement directement à la première bielle 43a. Ceci permet de plaquer plus efficacement la porte 3 sur la paroi latérale 20 de la cabine 2 par ses deux extrémités longitudinales, augmentant l'étanchéité de la fermeture.

La deuxième came 46 est plus éloignée transversalement de la porte 3 que le rail 40. La deuxième came 46 comprend une première portion 461 et une deuxième portion 462. La première portion 461 de la deuxième came 46 s'étend parallèlement au rail 40. La deuxième portion 462 de la deuxième came 46 est incurvée en direction du rail. La deuxième bielle 43b est en liaison glissière selon l'axe longitudinal X avec la deuxième came 46. La bielle 43b comprend de préférence des organes de roulement configurés pour rouler sans glissement dans le chemin formé par la deuxième came 46.

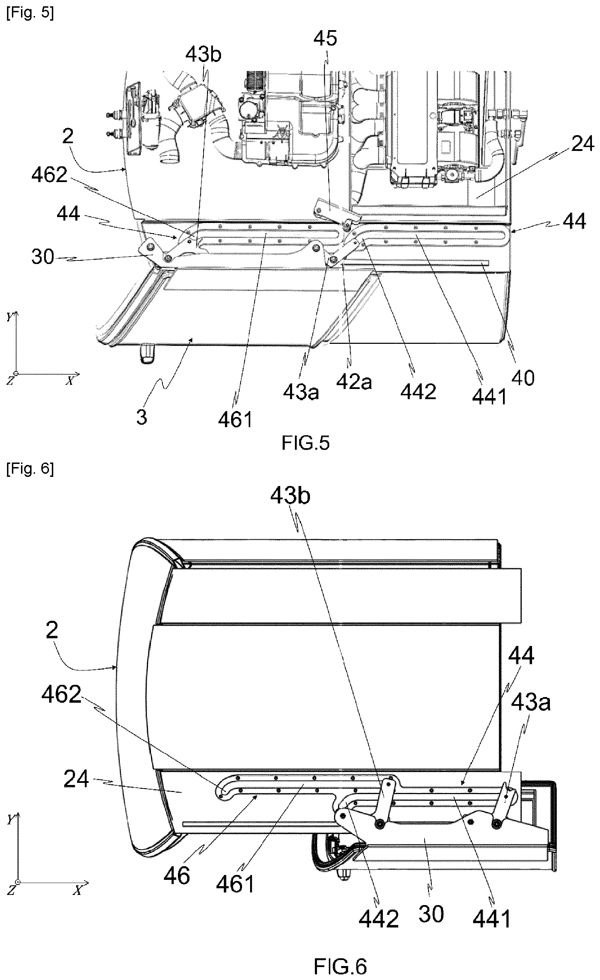

Dans le mode de réalisation décrit sur la figure 4 et la figure 5, les cames 44, 46 sont alignées suivant l'axe longitudinal X de la cabine 2. Les bielles 43a et 43b présentent alors des dimensions semblables, notamment au niveau de leur portion longue, ce qui facilite la fabrication du dispositif de guidage 4.

Le dispositif de guidage 4 est configuré de sorte que, pour passer de la position ouverte à la position fermée, la porte 3 de la cabine 2 décrive le premier mouvement de translation longitudinale par rapport à la cabine 2 lorsque la première bielle 43a circule sur la première portions 441 de la première cames 44 et que la porte 3 de la cabine 2 décrive le deuxième mouvement de translation transversale par rapport à la cabine 2 lorsque la première bielle 43a, circule la deuxième portion 442 de la première came 44. La deuxième bielle 43b suit alors un mouvement identique à celui de la première bielle 43b par l'intermédiaire du moyen d'asservissement 46.

Dans le cas où le moyen d'asservissement 46 est une deuxième came 46, le dispositif de guidage 4 est configuré de sorte que, pour passer de la position ouverte à la position fermée, la porte 3 de la cabine 2 décrive le premier mouvement de translation longitudinale par rapport à la cabine 2 lorsque les bielles 43a, 43b circulent respectivement sur les premières portions 441, 461 de la première et deuxième cames 44, 46 et que la porte 3 de la cabine 2 décrive le deuxième mouvement de translation transversale par rapport à la cabine 2 lorsque la première et la deuxième bielles 43a, 43b circulent respectivement sur les deuxièmes portions 442, 462 de la première et deuxième cames 44, 46.

Le dispositif de guidage 4 permet ainsi de réduire l'encombrement transversal de la porte 3 en position ouverte et pendant la fermeture, la porte 3 coulissant sur le rail 40 au plus proche de l'extérieur de la paroi latérale 20 de la cabine 2. En outre lors de la fermeture de la porte 3, la portion incurvée de la première came 44 en direction du rail 40 induit un pivotement des bielles 43a, 43b par rapport aux organes de roulement 42a, 42b, suivi d'un pivotement du montant supérieur 30 de la porte 3 par rapport aux bielles 43a, 43b de sorte que les bords de la porte 3 sont plaqués contre la paroi latérale 20 de la cabine 2 au niveau de l'ouverture 22, permettant d'assurer une fermeture étanche de la cabine 2. L'engin agricole 1 peut ainsi présenter une cabine 2 à hauteur de la végétation. Enfin, un utilisateur de l'engin agricole 1 peut ouvrir la porte 3 de la cabine 2 et rouler avec la porte 3 de la cabine 2 ouverte, même lorsque l'engin agricole 1 se trouve dans un rang de vignes. Plus la deuxième portion 442 de la première came 44 présente une forte courbure et une longueur augmentée en direction du rail 40, et meilleur sera l'effet de placage de la porte 3 sur la paroi latérale 20. Dans le cas où le moyen d'asservissement est une deuxième came 46, plus la deuxième portion 462 de la deuxième came 46 présente une forte courbure et une longueur augmentée en direction du rail 40, et meilleur sera l'effet de placage de la porte 3 sur la paroi latérale 20.

Avantageusement, le montant supérieur 34 de la porte 3 comprend au moins une encoche configurée pour coopérer avec la première et/ou la deuxième bielle 43a, 43b. Dans cette configuration, l'effet de placage est davantage renforcé.

Dans le mode de réalisation décrit sur la figure 4 et la figure 5, la première portion 461 de la deuxième came 46 comprend une butée 45 configurée pour être en contact avec la deuxième bielle 43b lorsque la porte 3 est en position ouverte. Le dispositif de guidage 4 peut ainsi maintenir la porte 3 en position ouverte, la deuxième bielle 43b comprenant de préférence une encoche sur l'extrémité de sa portion longue configurée pour coopérer avec la butée 45.

La figure 6 illustre le dispositif de guidage 4 selon un autre mode de réalisation. Ce mode de réalisation diffère du mode de réalisation de la figure 4 et de la figure 5 en ce que la deuxième came 46 est transversalement décalée par rapport à la première came 44. La deuxième bielle 43b présente ainsi une longueur supérieure à une longueur de la première bielle 43a. Dans le cas où les bielles 43a, 43b sont en forme de « L », la portion longue de la deuxième bielle 43ba est plus grande que la portion longue de la deuxième bielle 43a. Dans une telle configuration, l'amplitude d'ouverture de la porte 3 est sensiblement augmentée.

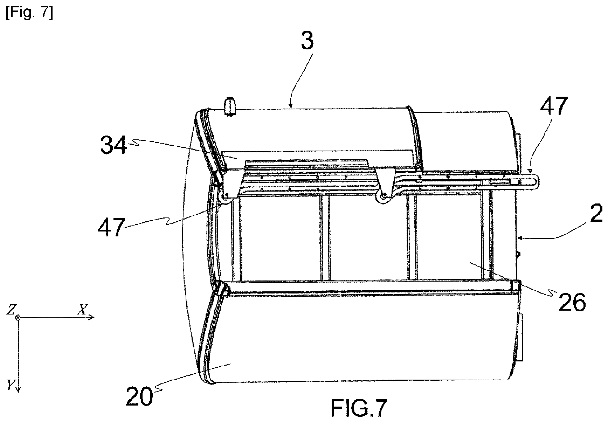

La figure 7 illustre le dispositif de guidage 4 selon un autre mode de réalisation de l'invention. Le dispositif de guidage 4 comprend en outre au moins une troisième came 47 fixée à un dessous 26 de la cabine 2. Ici, le dispositif de guidage 4 comprend deux troisièmes cames 47 fixées au dessous 26 de la cabine 2. La porte 3 comprend un montant inférieur 34, opposé selon l'axe vertical Z au montant supérieur 30. Le montant inférieur 34 est en liaison glissière d'axe longitudinal X avec les troisièmes cames 47. Le guidage de la porte 3 est ainsi amélioré en se faisant suivant ses deux extrémités. Le glissement des organes de roulement 42a, 42b est également facilité, le poids de la porte 3 étant distribué sur un plus grand nombre d'appuis sur la cabine 2.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Par exemple, dans un mode de réalisation alternatif (non illustré), le moyen d'asservissement 46 peut alternativement être une barre de renvoi reliant mécaniquement par ses extrémités libres, par l'intermédiaire de liaisons pivots, la première bielle 43a et la deuxième bielle 43b, pour asservir mécaniquement la deuxième bielle 43b. La longueur d'une telle barre de renvoi peut en outre être réglable pour régler la distance entre les deux bielles, de sorte à s'adapter à différentes largeurs d'ouverture de cabine.

## Revendications

1. Dispositif de guidage (4) d'une porte (3) configuré pour relier ladite porte (3) à une cabine (2) de pilotage d'un engin, notamment d'un engin agricole (1), la cabine (2) comprenant une paroi latérale (20) délimitant une ouverture (22) et un dessus (24), la porte (3) de la cabine (2) étant mobile entre une position fermée dans laquelle ladite porte (3) ferme l'ouverture (22) de la cabine (2) et une position ouverte dans laquelle ladite porte (3) laisse libre l'ouverture (22) de la cabine (2), le dispositif (4) comprenant :
- un rail (40) fixé sur le dessus (24) la cabine (2) et s'étendant selon un axe longitudinal de la cabine (2) ;
- un premier organe de roulement (42a) en liaison glissière avec le rail (40) et un deuxième organe de roulement (42b) en liaison glissière avec le rail (40) ;
- une première bielle (43a) en liaison pivot selon un premier axe vertical de la cabine (2) avec le premier organe de roulement (42a) et en liaison pivot selon un deuxième axe vertical de la cabine (2) avec un montant supérieur (30) de la porte (3), et une deuxième bielle (43b) en liaison pivot selon un troisième axe vertical avec le deuxième organe de roulement (42b) et en liaison pivot selon un quatrième axe vertical avec le montant (30) de la porte (3) ;
le dispositif de guidage (4) comprend une première came (44) fixée à la cabine (2) sur le dessus (24) et vers l'intérieur par rapport au rail (40), la première came (44) présentant une première portion (441) s'étendant parallèlement au rail (40) et une deuxième portion (442) incurvée en direction du rail, la première bielle (43a) étant en liaison glissière avec la première came (44), le dispositif de guidage (4) étant configuré de sorte que, pour passer de la position ouverte à la position fermée, la porte (3) de la cabine (2) décrive un premier mouvement de translation longitudinale par rapport à la cabine (2) lorsque la première bielle (43a) circule sur la première portion (441) de la première came (44), et que la porte (3) de la cabine (2) décrive un deuxième mouvement de translation vers l'ouverture (22) de la cabine (2) lorsque la première bielle (43a) circule sur la deuxième portion (442) de la première came (44), la première et deuxième bielles (43a, 43b) pivotant respectivement par rapport au premier et deuxième organes de roulement (42a, 42b);
**caractérisé en ce que** le dispositif de guidage comprend en outre un moyen d'asservissement (46) de la deuxième bielle (43b) par rapport à la première bielle (43a) de sorte que la première et deuxième bielle décrivent un même mouvement.

2. Dispositif de guidage (4) selon la revendication 1, **caractérisé en ce que** le moyen d'asservissement (46) mécanique est une deuxième came (46) fixée à la cabine (2) sur le dessus (24) et vers l'intérieur par rapport au rail (40) et présentant une première portion (461) s'étendant parallèlement au rail (40) et une deuxième portion (462) incurvée en direction du rail (40), la deuxième bielle (43b) étant en liaison glissière avec la deuxième came (46).

3. Dispositif de guidage (4) selon la revendication 2, **caractérisé en ce que** la première portion (461) de la deuxième came (46) comprend une butée (47) configurée pour être en contact avec la deuxième bielle (43b) lorsque la porte (3) de la cabine (2) est en position ouverte.

4. Dispositif de guidage (4) selon la revendication 2 ou 3, **caractérisé en ce que** la première came (44) et la deuxième came (46) sont alignées suivant l'axe longitudinal de la cabine (2).

5. Dispositif de guidage (4) selon la revendication 2 ou 3, **caractérisé en ce que** la deuxième bielle (43b) présente une longueur supérieure à une longueur de la première bielle (43a), la deuxième came (46) étant à une distance supérieure du rail (40) par rapport à la première came (44).

6. Dispositif de guidage (4) selon l'une quelconque des revendications précédentes, **caractérisé en ce que** chacune des bielles (43a, 43b) comprend une portion longue et une portion courte de sorte à présenter une géométrie en forme de L, le premier axe vertical et le deuxième axe vertical étant positionné à l'intersection des deux portions de chacune des bielles (43a, 43b) et le troisième axe vertical et quatrième axe vertical étant positionné à une extrémité libre de la portion courte de chacune des bielles (43a, 43b).

7. Dispositif de guidage (4) selon l'une quelconque des revendications précédentes, **caractérisé en ce qu'**il comprend au moins une troisième came (47) fixée à un dessous (26) de la cabine (2), la porte (3) de la cabine (2) comprenant en outre un montant inférieur (34) verticalement opposé au montant supérieur (30), le montant inférieur (34) étant en liaison glissière d'axe longitudinal avec la troisième came (47).

8. Cabine (2) de pilotage comprenant une paroi latérale (20) délimitant une ouverture (22) et comprenant en outre une porte (3) mobile entre une position fermée dans laquelle ladite porte (3) ferme l'ouverture (22) de la cabine (2) et une position ouverte dans laquelle ladite porte (3) laisse libre l'ouverture (22) de la cabine (2), la cabine (2) de pilotage comprenant en outre un dispositif de guidage (4) selon l'une quelconque des revendications 1 à 7 reliant la porte (3) à la cabine (2) de pilotage.

9. Cabine (2) de pilotage selon la revendication 8, **caractérisée en ce que** la cabine (2) comprend des moyens de pressurisation de ladite cabine (2).

10. Engin agricole (1), notamment un tracteur enjambeur pour vignes, comprenant une cabine (2) de pilotage selon l'une quelconque des revendications 8 à 9.

## Patentansprüche

1. Führungsvorrichtung (4) einer Tür (3), die konfiguriert ist, um die Tür (3) mit einer Steuerkabine (2) einer Maschine, insbesondere einer landwirtschaftlichen Maschine (1), zu verbinden, die Kabine (2) umfassend eine Seitenwand (20), die eine Öffnung (22) begrenzt, und eine Oberseite (24), wobei die Tür (3) der Kabine (2) zwischen einer geschlossenen Position, in der die Tür (3) die Öffnung (22) der Kabine (2) verschließt, und einer offenen Position, in der die Tür (3) die Öffnung (22) der Kabine (2) frei lässt, bewegbar ist, die Vorrichtung (4) umfassend:
- eine Schiene (40), die an der Oberseite (24) der Kabine (2) befestigt ist und sich entlang einer Längsachse der Kabine (2) erstreckt;
- ein erstes Rollelement (42a) in Gleitverbindung mit der Schiene (40) und ein zweites Rollelement (42b) in Gleitverbindung mit der Schiene (40);
- eine erste Pleuelstange (43a) in Schwenkverbindung entlang einer ersten vertikalen Achse der Kabine (2) mit dem ersten Rollelement (42a) und in Schwenkverbindung entlang einer zweiten vertikalen Achse der Kabine (2) mit einer oberen Säule (30) der Tür (3), und eine zweite Pleuelstange (43b) in Schwenkverbindung entlang einer dritten vertikalen Achse mit dem zweiten Rollelement (42b) und in Schwenkverbindung entlang einer vierten vertikalen Achse mit der Säule (30) der Tür (3);
wobei die Führungsvorrichtung (4) einen ersten Nocken (44) umfasst, der an der Kabine (2) an der Oberseite (24) und nach innen in Bezug auf die Schiene (40) befestigt ist, der erste Nocken (44) einen ersten Abschnitt (441), der sich parallel zu der Schiene (40) erstreckt, und einen zweiten Abschnitt (442), der in Richtung der Schiene gekrümmt ist, aufweist, wobei die erste Pleuelstange (43a) in Gleitverbindung mit dem ersten Nocken (44) ist, die Führungsvorrichtung (4) konfiguriert ist, sodass die Tür (3) der Kabine (2), um von der offenen Position in die geschlossene Position überzugehen, eine erste Längstranslationsbewegung in Bezug auf die Kabine (2) beschreibt, wenn die erste Pleuelstange (43a) über den ersten Abschnitt (441) des ersten Nockens (44) läuft, und dass die Tür (3) der Kabine (2) eine zweite Translationsbewegung in Richtung der Öffnung (22) der Kabine (2) beschreibt, wenn die erste Pleuelstange (43a) über den zweiten Abschnitt (442) des ersten Nockens (44) läuft, die erste und zweite Pleuelstange (43a, 43b) jeweils in Bezug auf das erste und das zweite Rollelement (42a, 42b) schwenken;
**dadurch gekennzeichnet, dass** die Führungsvorrichtung ferner eine Servosteuerungseinrichtung (46) der zweiten Pleuelstange (43b) in Bezug auf die erste Pleuelstange (43a) umfasst, sodass die erste und die zweite Pleuelstange eine gleiche Bewegung beschreiben.

2. Führungsvorrichtung (4) nach Anspruch 1, **dadurch gekennzeichnet, dass** die mechanische Servosteuerungseinrichtung (46) ein zweiter Nocken (46) ist, der an der Kabine (2) an der Oberseite (24) und nach innen in Bezug auf die Schiene (40) befestigt ist und einen ersten Abschnitt (461), der sich parallel zu der Schiene (40) erstreckt, und einen zweiten Abschnitt (462), der in Richtung der Schiene (40) gekrümmt ist, aufweist, wobei die zweite Pleuelstange (43b) in Gleitverbindung mit dem zweiten Nocken (46) ist.

3. Führungsvorrichtung (4) nach Anspruch 2, **dadurch gekennzeichnet, dass** der erste Abschnitt (461) des zweiten Nockens (46) einen Anschlag (47) umfasst, der konfiguriert ist, um mit der zweiten Pleuelstange (43b) in Kontakt ist, wenn die Tür (3) der Kabine (2) in der offenen Position ist.

4. Führungsvorrichtung (4) nach Anspruch 2 oder 3, **dadurch gekennzeichnet, dass** die erste Nocke (44) und die zweite Nocke (46) entlang der Längsachse der Kabine (2) ausgerichtet sind.

5. Führungsvorrichtung (4) nach Anspruch 2 oder 3, **dadurch gekennzeichnet, dass** die zweite Pleuelstange (43b) eine Länge aufweist, die größer ist als eine Länge der ersten Pleuelstange (43a), wobei der zweite Nocken (46) in einem größeren Abstand von der Schiene (40) als der erste Nocken (44) angeordnet ist.

6. Führungsvorrichtung (4) nach einem der vorherigen Ansprüche, **dadurch gekennzeichnet, dass** jede der Pleuelstangen (43a, 43b) einen langen Abschnitt und einen kurzen Abschnitt umfasst, sodass sie eine L-förmige Geometrie aufweist, wobei die erste vertikale Achse und die zweite vertikale Achse an dem Schnittpunkt der zwei Abschnitte jeder der Pleuelstangen (43a, 43b) positioniert sind und die dritte vertikale Achse und die vierte vertikale Achse an einem freien Ende des kurzen Abschnitts jeder der Pleuelstangen (43a, 43b) positioniert sind.

7. Führungsvorrichtung (4) nach einem der vorherigen Ansprüche, **dadurch gekennzeichnet, dass** sie mindestens einen dritten Nocken (47) umfasst, der an einer Unterseite (26) der Kabine (2) befestigt ist, die Tür (3) der Kabine (2) ferner umfassend einen unteren Pfosten (34) vertikal gegenüber der oberen Säule (30), wobei die untere Säule (34) mit seiner Längsachse in Gleitverbindung mit dem dritten Nocken (47) ist.

8. Steuerkabine (2, umfassend eine Seitenwand (20), die eine Öffnung (22) begrenzt, und ferner umfassend eine Tür (3), die zwischen einer geschlossenen Position, in der die Tür (3) die Öffnung (22) der Kabine (2) verschließt, und einer offenen Position, in der die Tür (3) die Öffnung (22) der Kabine (2) frei lässt, bewegbar ist, die Steuerkabine (2) ferner umfassend eine Führungsvorrichtung (4) nach einem der Ansprüche 1 bis 7, die die Tür (3) mit der Steuerkabine (2) verbindet.

9. Steuerkabine (2) nach Anspruch 8, **dadurch gekennzeichnet, dass** die Kabine (2) Druckbeaufschlagungseinrichtungen der Kabine (2) umfasst.

10. Landwirtschaftliche Maschine (1), insbesondere ein Pfahlbautraktor für Weinberge, mit einer Steuerkabine (2) nach einem der Ansprüche 8 bis 9.

## Claims

1. A guidance device (4) for a door (3) configured to connect said door (3) to a driving cab (2) of a machine, notably of an agricultural machine (1), the cab (2) comprising a side wall (20) delimiting an opening (22) and a top (24), the door (3) of the cab (2) being movable between a closed position in which said door (3) closes the opening (22) of the cab (2) and an open position wherein said door (3) leaves the opening (22) of the cab (2) free, the device (4) comprising:
- a rail (40) fixed on the top (24) of the cab (2) and extending according to a longitudinal axis of the cab (2);
- a first rolling member (42a) in sliding connection with the rail (40) and a second rolling member (42b) in sliding connection with the rail (40);
- a first connecting rod (43a) in pivot connection according to a first vertical axis of the cab (2) with the first rolling member (42a) and in pivot connection according to a second vertical axis of the cab (2) with an upper upright (30) of the door (3), and a second connecting rod (43b) in pivot connection according to a third vertical axis with the second rolling member (42b) and in pivot connection according to a fourth vertical axis with the upright (30) of the door (3);
the guidance device (4) comprises a first cam (44) fixed to the cab (2) on the top (24) and toward the inside relative to the rail (40), the first cam (44) presenting a first portion (441) extending parallel to the rail (40) and a second portion (442) curved in the direction of the rail, the first connecting rod (43a) being in sliding connection with the first cam (44),
the guidance device (4) being configured so that, to move from the open position to the closed position, the door (3) of the cab (2) describes a first longitudinal movement in translation relative to the cab (2) when the first connecting rod (43a) travels on the first portion (441) of the first cam (44), and that the door (3) of the cab (2) describes a second movement in translation toward the opening (22) of the cab (2) when the first connecting rod (43a) travels on the second portion (442) of the first cam (44), the first and second connecting rods (43a, 43b) pivoting respectively relative to the first and second rolling members (42a, 42b); **characterized in that** the guidance device further comprises a control means (46) for the second connecting rod (43b) relative to the first connecting rod (43a) so that the first and second connecting rods describe a same movement.

2. The guidance device (4) according to claim 1, **characterized in that** the mechanical control means (46) is a second cam (46) fixed to the cab (2) on the top (24) and towards the inside relative to the rail (40) and presenting a first portion (461) extending parallel to the rail (40) and a second portion (462) curved in the direction of the rail (40), the second connecting rod (43b) being in sliding connection with the second cam (46).

3. The guidance device (4) according to claim 2, **characterized in that** the first portion (461) of the second cam (46) comprises a stop (47) configured to be in contact with the second connecting rod (43b) when the door (3) of the cab (2) is in the open position.

4. The guidance device (4) according to claim 2 or 3, **characterized in that** the first cam (44) and the second cam (46) are aligned according to the longitudinal axis of the cab (2).

5. The guidance device (4) according to claim 2 or 3, **characterized in that** the second connecting rod (43b) presents a length greater than a length of the first connecting rod (43a), the second cam (46) being at a greater distance from the rail (40) relative to the first cam (44).

6. The guidance device (4) according to any one of the preceding claims, **characterized in that** each of the connecting rods (43a, 43b) comprises a long portion and a short portion so as to present an L-shaped geometry, the first vertical axis and the second vertical axis being positioned at the intersection of the two portions of each of the connecting rods (43a, 43b) and the third vertical axis and fourth vertical axis being positioned at a free end of the short portion of each of the connecting rods (43a, 43b).

7. The guidance device (4) according to any one of the preceding claims, **characterized in that** it comprises at least a third cam (47) fixed to an underside (26) of the cab (2), the door (3) of the cab (2) further comprising a lower upright (34) vertically opposite the upper upright (30), the lower upright (34) being in sliding connection with the third cam (47) along a longitudinal axis.

8. A driving cab (2) comprising a side wall (20) delimiting an opening (22) and further comprising a door (3) movable between a closed position in which said door (3) closes the opening (22) of the cab (2) and an open position in which said door (3) leaves the opening (22) of the cab (2) free, the driving cab (2) further comprising a guidance device (4) according to any one of claims 1 to 7 connecting the door (3) to the driving cab (2).

9. The driving cab (2) according to claim 8, **characterized in that** the cab (2) comprises pressurization means for said cab (2).

10. An agricultural machine (1), notably a straddle tractor for vineyards, comprising a driving cab (2) according to any one of claims 8 to 9.
